# EUROPÄISCHE PATENTSCHRIFT

(11) **EP 1 635 618 B1**
(45) Veröffentlichungstag und Bekanntmachung des Hinweises auf die Patenterteilung: **10.08.2011**
(21) Anmeldenummer: 04026889.8
(22) Anmeldetag: 12.11.2004
(51) Int. Cl.: H05B 37/02

(54) **Beleuchtungssystem**
Lighting system
Système d'éclairage

(30) Priorität: 14.09.2004 DE 102004044406
(43) Veröffentlichungstag der Anmeldung: 15.03.2006
(73) Patentinhaber: Krinner Innovation GmbH, 94342 Strasskirchen (DE)
(72) Erfinder: Mack, Helmut, 72764 Reutlingen (DE)
(74) Vertreter: Leske, Thomas

(56) Entgegenhaltungen:
- DE-A1- 19 604 298
- GB-A- 2 322 185
- US-A1- 2003 057 886
- PATENT ABSTRACTS OF JAPAN Bd. 1999, Nr. 12, 29. Oktober 1999 (1999-10-29) & JP 11 206040 A (JISUTEC:KK), 30. Juli 1999 (1999-07-30)

## Beschreibung

Die Erfindung bezieht sich auf ein Beleuchtungssystem nach dem Oberbegriff des Patentanspruchs 1. Ein derartiges Beleuchtungssystem ist beispielsweise aus den Druckschriften DE 196 04 298 A1 oder GB 2 322 185 A bekannt.

Die Erfindung findet ihre Anwendung in einem Beleuchtungssystem, das aus einer Gruppe von im Wesentlichen gleichartigen Leuchtelementen besteht. Die Leuchtelemente können insbesondere elektrische Baumkerzen eines Weihnachtsbaumes sein. Elektrische Baumkerzen finden auch bei anderen Bäumen Verwendung. Über die bekannten elektrischen Baumkerzen hinaus können die Leuchtelemente jedoch auch andere elektrische Baumschmuckelemente sein. Das Beleuchtungssystem gemäß der Erfindung kann auch eine Gruppe von Gartenleuchten oder Partyleuchten zum Einschalten bringen. Das Beleuchtungssystem kann darüber hinaus komplexer sein, indem es mehr als eine Gruppe, also zwei, drei oder vier Gruppen von unter sich im Wesentlichen gleichartigen Leuchtelementen umfasst.

Ein wesentliches Problem der elektrischen Baumkerzen besteht in deren Energieversorgung. Eine zentrale Energieversorgung aus dem Netz ist meistens mit der unangenehmen Tatsache einer Verkabelung verbunden. Als elektrische Christbaumbeleuchtung sind nämlich Lichterketten weit verbreitet, bei denen die elektrischen Kerzen an einem langen, zweipoligen Kabel aufgereiht sind. Das Kabel, das von einem Netzgerät mit der Betriebsspannung für die elektrischen Kerzen versorgt wird, muss entlang des Stammes und der Zweige des Christbaumes bzw. von Kerzenort zu Kerzenort in umständlicher Weise verlegt werden.

Da die Verlegung der langen Lichterkette so umständlich ist, wurden Versuche unternommen, die zentrale Energieversorgung der elektrischen Kerzen zu vereinfachen. Derartige Vereinfachungen der zentralen Energieversorgung gehen beispielsweise aus den Druckschriften DE 198 23 741 A1, DE 38 24 972 A1, DE 34 02 595 A1, DE 41 13 442 A1 hervor.

Um von einer externen, zentralen Energieversorgung wegzukommen, befasst sich eine andere Gruppe von Druckschriften mit Leuchten für Christbäume, die eine interne Stromversorgung und deshalb keine Verkabelung zu Energielieferzwecken aufweisen. Als weiteres Beispiel, zusätzlich zu den eingangs genannten Druckschriften, sei die Batterieleuchte gemäß der Druckschrift DE 40 40 136 A1 genannt. Die lokale Energieversorgung erfolgt mit Hilfe eines handelsüblichen Akkumulators oder einer handelsüblichen Batterie. Als Leuchtmittel sind Glühlampen, Glimmlampen, Leuchtdioden usw. vorgeschlagen worden. Die Batterieleuchte gemäß DE 40 40 136 A1 weist in üblicher Weise ein Gehäuse, einen Sockel und eine Fußklemme auf. Von diesem Stand der Technik mit ständiger Empfangsbereitschaft geht die vorliegende Erfindung aus wie auch von dem Stand der Technik gemäß DE 196 04 298 A1 oder GB 2 322 185 A.

Zum Ein- und Ausschalten weist die bekannte Batterieleuchte einen mechanischen Schalter oder ein Elektronikmodul für eine Fernbetätigung auf. Im ersten Fall ist ein Drehschalter vorgesehen, bei dem das Gehäuse relativ zum Sockel verdreht wird. Im zweiten Fall weist das Elektronikmodul einen Sensor in Form eines Funkempfängers oder eines Mikrofons auf. Die zweitgenannte Alternative (Funkempfänger oder Mikrofon) ist der ersten insoweit überlegen, als sie es gestattet, eine Vielzahl gleichartiger Batterieleuchten gleichzeitig ein- und auszuschalten. Die Empfänger der Fernbedienung gemäß DE 40 40 136 A1 benötigen - wie bei allen anderen bekannten Fernbedienungen auch - Sensoren, die an das abgestrahlte und empfangene Signal physikalisch angepasst sind.

Ein solcher Sender erfordert Platz, erhöht das Gewicht und verbraucht Energie. Insbesondere in den langen Bereitschaftsphasen, in denen die Batterieleuchten nicht eingeschaltet sind, verbrauchen die Sensoren (Funkempfänger usw.) viel Energie. Denn sie müssen so geschaltet sein, dass sie das zentrale elektrische Einschaltsignal nicht übersehen.

Zur Vermeidung solcher Sensoren wurde in der älteren Anmeldung gemäß DE 10 2004 006 006.1 ein anderer Weg beschritten. Der dortige Vorschlag beruht auf der Überlegung, dass eine zentrale, aus einer gemeinsamen Energiequelle gespeiste, galvanische oder drahtlose Stromversorgung in jedem Falle zu aufwendig und deshalb zu vermeiden ist, dass aber ein zentrales, gleichzeitiges Ein- und Ausschalten der Leuchtmittel aus Gründen des Bedienungskomforts vorteilhaft ist. Unter diesen Randbedingungen hat der Vorschlag gemäß der älteren Anmeldung DE 10 2004 006 006.1 erkannt, dass für das Einschalten der Christbaumbeleuchtung im Prinzip keine Sensoren in den Leuchtmitteln erforderlich sind. Das Problem wird dort so gelöst, dass die elektrischen Leitungseigenschaften eines Naturbaumes genützt werden, um ein zentral erzeugtes Einschaltsignal an die Baumkerzen zu verteilen. Es ist also nicht nur kein Sensor, sondern auch kein technischer Kabelbaum und keine Lichterkette erforderlich. Vielmehr wird in der älteren Anmeldung von der Tatsache Gebrauch gemacht, dass der natürliche Baum eine elektrische Impedanz, insbesondere eine von der Feuchtigkeit des Holzes etwas abhängige Leitfähigkeit, aufweist. Es hat sich dort gezeigt, dass eine einpolige galvanische Kontaktgabe zu dem Baumstamm hin genügt, um den Baum als Übertragungsmedium für das zentrale Einschaltsignal zu nutzen.

Dennoch ist es als Alternative zu der technischen Lehre gemäß der älteren Anmeldung DE 10 2004 006 006.1 sinnvoll, die drahtlosen Fernbedienungssysteme weiter zu entwickeln. So offenbart das Gebrauchsmuster DE 201 14 003 U1 ein kabelloses Leuchtelementesystem in Form einer Transponderlösung. Es ist dem eigentlichen Empfänger ein Servo-Empfänger vorgeschaltet, der so ausgebildet ist, dass er einem Vorbereitungssignal Energie zur Aktivierung eines Stand-by-Modus der Empfängerschaltung entnimmt. Die Energie des Vorbereitungssignals genügt für den Transponder. Bei dieser bekannten Lösung wird der Empfänger der Fernbedienung nicht auf Horchbereitschaft geschaltet, sondern es ist ein Servoempfänger mit extrem niedrigem Stromverbrauch (Transponder) vorgeschaltet, der dann auf ein Funksignal reagiert, um die eigentliche Stand-by-Bereitschaft herzustellen. Die Bereitschaftsschaltung ihrerseits braucht bekanntlich relativ viel Energie.

In ähnlicher Weise offenbaren die japanischen Patentanmeldungen JP 10117450 A, JP 2003-219484 A und JP 2002-218679 A Fernbedienungen, die keinen Strom aus der Stromversorgung einer elektrischen Lampe entnehmen. Erst wenn das Einschalten der Lampe benötigt wird, wird der Empfänger durch ein elektromagnetisches Signal aufgeweckt und in Bereitschaft versetzt. Solche Transponderlösungen (Servo-Empfänger plus Empfänger) möchte die Erfindung aus Gründen des Aufwands vermeiden.

Schließlich sind noch Fernbedienungen für einzelne Fernsehgeräte oder ähnliche Geräte bekannt. Gemäß der Anmeldung JP 10336760 A wird Energie gespart, indem der Empfänger sich auf den Sender synchronisiert und der Empfänger regelmäßig ein- und ausgeschaltet wird. In den Aus-Phasen benötigt der Empfänger keinen Strom.

Um Energie zu sparen, wird in der JP 2002-135856 A die Empfangseinheit zyklisch über einen Pulsgenerator aus- und eingeschaltet. Die Empfangseinheit wird eingeschaltet durch einen langen Sendeimpuls, der länger ist als ein kompletter Ein-/Aus-Puls, ohne weiter durch den Pulsgenerator unterbrochen zu werden, damit ein Kommando empfangen werden kann.

In der JP 11206040 A wird, um Energie zu sparen, die Empfangseinheit zyklisch ein- und ausgeschaltet. Einem Kommando wird ein Hilfssignal vorangestellt, das die Empfangseinheit auf den Empfang vorbereitet. Die Gesamtlänge des Kommandos ist dann kaum länger als die Unterbrechungszeit, in der nicht empfangen wird.

Der Empfänger gemäß JP 11285086 A arbeitet mit Unterbrechungen, um Energie zu sparen. Einem Kommando werden eine Anzahl Impulse vorangestellt, die den Empfänger empfangsbereit für das Kommando schalten.

In der JP 2000-184474 A ist es das Ziel, die Verwendung zusätzlicher Bausteine wie Timer (Zeitglieder) zu vermeiden. Es wird ein Mikroprozessor mit Bereitschaftsfunktion verwendet. Wenn das Gerät auf Stand-by geht, so tut dies auch der Prozessor im festgelegten Zeitabschnitt. Beim Erwachen aus der Bereitschaft prüft der Prozessor, ob ein Kommando da war. Wenn ein Kommando da war, arbeitet der Prozessor normal weiter und das Gerät geht wieder in Normalbetrieb.

Diese Schaltungen lösen aber nicht die Probleme, die bei einem Kollektiv von drahtlosen Empfängern auftauchen.

Ausgehend von dem genannten Stand der Technik gemäß DE 40 40 136 A1 und DE 201 14 003 U1 ist es die Aufgabe der Erfindung, bei einem Beleuchtungssystem eine Mehrzahl von Leuchtelementen aus einem Energiesparmodus heraus ein- oder auszuschalten.

Diese Aufgabe wird durch ein Beleuchtungssystem mit den Merkmalen des Patentanspruchs 1 gelöst. Zweckmäßige Weiterbildungen sind in den Unteransprüchen enthalten.

Ein Lösungsmerkmal besteht darin, dass eine Gruppe von Empfangsschaltungen asynchron intermittierend in eine energiesparende Empfangsbereitschaft geschaltet wird. Jede Empfangsschaltung befindet sich also für kurze Zeit in einer energiesparenden Empfangsbereitschaft, während sie in der übrigen Zeit praktisch ausgeschaltet ist. Der Sender ist so darauf abgestimmt, dass er während der Zeit der Empfangsbereitschaft mindestens eine Ein- oder Ausschaltinformation und/oder Bereitschaftsinformation und/oder Synchronisierungsinformation an die Empfangsschaltungen abgibt.

Die Erfindung hat den Vorteil, bei einer Mehrzahl von Leuchtelementen einen Bereitschaftsmodus bereit zu stellen, der im Vergleich zu einem permanenten Bereitschaftsbetrieb eine wesentliche Energieeinsparung ermöglicht. Gleichzeitig entsteht der Vorteil einer praxistauglichen Verwirklichung. Die Erfindung hat erkannt, dass es nicht unbedingt erforderlich ist, alle Empfangsschaltungen einer Gruppe oder alle Leuchtelemente einer Gruppe gleichzeitig einzuschalten.

Damit die Gruppe von Leuchtelementen in die erfindungsgemässe Bereitschaft kommt, können die einzelnen Empfänger auf zweierlei Art aktiviert werden. Entweder trägt jedes Leuchtelement einen EIN-Schalter, der die Stromversorgung (Akkumulator oder Batterie) mit dem Empfänger und der Leuchtdiode verbindet; diese Lösung spart besonders viel Energie, wenn der Kunde die Leuchtelemente nach Gebrauch deaktiviert. Oder jedes Leuchtelement schaltet sich nach seiner Entnahme aus einem Ladegerät selbst ein; diese Lösung ist besonders bedienungsfreundlich und verbraucht auch nur dann (etwas) Energie, sobald eine Entnahme aus dem Ladegerät erfolgt ist.

In den bevorzugten Ausführungsbeispielen der Erfindung werden entweder die Empfangsschaltungen asynchron eingeschaltet (während der Fernbedienungssender ein längeres Einschaltsignal abgibt) oder es werden vom Sender verteilte, gestaffelte Einschaltsignale abgegeben (nachdem alle Empfangsschaltungen in Bereitschaft gebracht worden sind). In beiden Ausführungsformen gehen die Lichter völlig unregelmässig im Verlauf mehrerer Sekunden an. Die ästhetische Wirkung dieses asynchronen Entzündens der Gruppe von vielen Leuchtelementen ist ungewöhnlich vorteilhaft. Die Erfindung wird nachfolgend anhand von Ausführungsbeispielen in Verbindung mit Figuren erläutert:
Es zeigt
   Figur 1 das Grundprinzip der erfindungsgemäßen Beleuchtungssystem-Fernbedienung
   Figur 2 das Blockschaltbild eines Empfängers der erfindungsgemäßen Beleuchtungssystem-Fernbedienung
   Figur 3 ein Schaltbild-Ausführungsbeispiel des Fernbedienungsempfängers nach Figur 2
   Figur 4 ein Schaltbild-Ausführungsbeispiel des Sendermoduls der erfindungsgemäßen Beleuchtungssystem-Fernbedienung
   Figur 5 ein Schaltbild eines Gleichstromwandlers für das Beleuchtungssystem gemäß der Erfindung und
   Figur 6 ein Ausführungsbeispiel eines Empfängersystems für die erfindungsgemäße Beleuchtung.

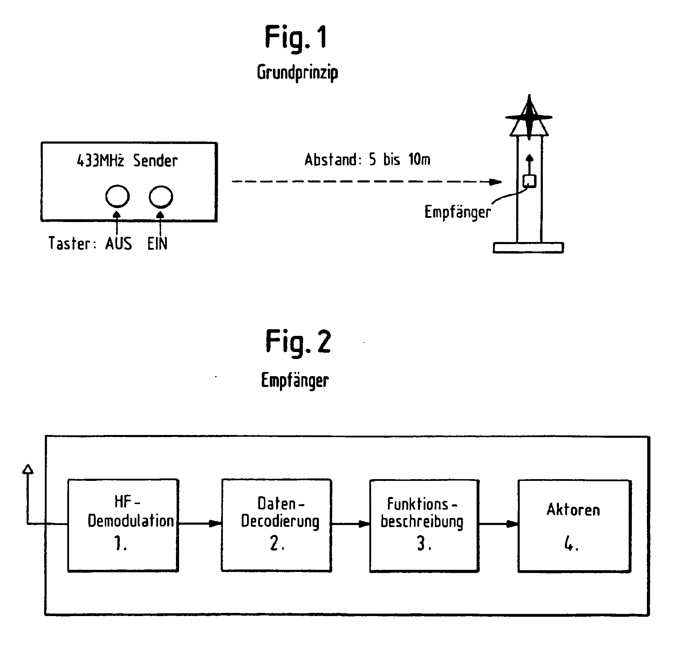

In Figur 1 ist das Grundprinzip der erfindungsgemäßen Fernbedienung für ein Beleuchtungssystem dargestellt. Kernstück der Erfindung ist ein drahtloser Empfänger, der an ein elektrisches Leuchtelement angeschlossen ist. Beispielhaft ist in Figur 1 eine elektrische Baumkerze eines Weihnachtsbaumes dargestellt. Bedeutsam für die Erfindung ist, dass eine Gruppe oder eine Mehrzahl oder ein Kollektiv von solchen Leuchtelementen vorgegeben ist, die aus einem Energiesparmodus heraus eingeschaltet werden. In jeder Baumkerze ist das Leuchtelement an eine im Wesentlichen gleichartige drahtlose Empfangsschaltung angeschlossen.

Die Erfindung ist nicht auf eine Gruppe von Baumkerzen beschränkt, sondern kann ebenso bei einem anderen Kollektiv von Leuchtelementen, die ein Beleuchtungssystem bilden, zum Einsatz kommen. Insbesondere ist die Erfindung nicht baumgebunden, d.h. die Signalübertragung zum Empfänger hängt beispielsweise nicht von den elektrischen Eigenschaften eines natürlichen Baumes ab.

Zur Erfindung gehört, dass jeder Empfänger auf eine energiesparende Art und Weise in Empfangsbereitschaft geschaltet wird, d.h. dass der Empfänger während verhältnismäßig langer Zeiträume ausgeschaltet ist und in dieser Zeit keine Energie für die Empfangsbereitschaft verwendet wird. Gemäß der Erfindung wird die Gruppe von Empfängern asynchron intermittierend in die energiesparende Empfangsbereitschaft geschaltet, so dass jeder Empfänger nur während eines kurzen, zufälligen Zeitschlitzes in Empfangsbereitschaft ist.

In einem Abstand von beispielsweise 5 bis 10 Meter von der Empfängergruppe befindet sich ein drahtloser Sender, der als Fernbedienung dient. Der Hochfrequenzsender sendet seine Signale beispielsweise auf einer Trägerfrequenz von 433 MHz aus, wobei die Schaltsignale diesen Träger modulieren. Im Prinzip genügen zwei manuelle Schalter, beispielsweise Taster AUS und EIN, welche das gesamte Beleuchtungssystem ein- oder ausschalten. Der drahtlose Sender der Fernbedienung ist erfindungsgemäß so auf die energiesparende Empfangsbereitschaft der Empfänger abgestimmt, dass mindestens eine Ein- oder Ausschaltinformation bei jeder Empfangsschaltung/jedem Leuchtelement der Gruppe eintrifft.

Anstatt den Träger direkt mit Ein- oder Ausschaltinformationen zu modulieren, ist es im Rahmen der Erfindung auch möglich, zunächst eine Bereitschaftsinformation oder eine Synchronisierungsinformation bei den asynchron intermittierenden Empfängern eintreffen zu lassen. Nachdem die Empfänger in eine gemeinsame Bereitschaft und/oder eine gemeinsame Synchronisation gebracht wurden, kann die eigentliche Information AUS oder EIN dann in verkürzter Form gesendet werden.

Die verwendeten Konzepte bezüglich der Hochfrequenztechnik und der Hochfrequenzübertragungsstrecken als solchen sind handelsüblich. Der Kern der Erfindung ist demgegenüber durch ein Tastverhältnis der intermittierenden Empfangsbereitschaft, also durch ein Verhältnis der Bereitschaftszeit zur gesamten Periodendauer gekennzeichnet. Dabei wird die Empfangsschaltung/das Leuchtelement einer Gruppe asynchron freilaufend zu den anderen Empfangsschaltungen/Leuchtelementen einer Gruppe von einem ausgeschalteten Zustand in die Empfangsbereitschaft geschaltet. Diese Vorgehensweise spart viel Energie, die dann für die eigentlichen Leuchtzwecke zur Verfügung steht. Beispielsweise erhöht sich die Betriebszeit einer Weihnachtsbaumbeleuchtung auf ca. 60 Tage, wenn der Stand-By-Betrieb im Verhältnis 1:10 getaktet wird. In diesem Beispiel folgen auf 10 Sekunden Ausschaltzeit 1 Sekunde Bereitschaftsbetrieb.

Die Nachteile der Taktung erweisen sich in einem Kollektiv von beispielsweise 15 Leuchtkerzen als Vorteil. In dem Gesamtsystem der Baumbeleuchtung wird nämlich ein effektvoller Ein- und Ausschaltvorgang erzielt. Die Leuchtelemente werden innerhalb der vorgegebenen Grundperiode asynchron, zufällig zum Aufleuchten gebracht. Dieser "Zündtakteffekt" ist beispielsweise einem natürlichen Anzünden einer Kerzenbeleuchtung ähnlich. Auf der Basis dieses Grundgedankens sind weitere Lichteffekte möglich.

Die Figur 2 zeigt das Blockschaltbild eines Empfängers der erfindungsgemäßen Fernbedienung. Hinter der Empfangsantenne folgen die vier Funktionsblöcke HF-Demodulation, Datendecodierung, Funktionsbeschreibung und Aktoren.

Zur HF-Demodulation 1 kann auf handelsübliche Demodulatoren zurückgegriffen werden. Bekannte HF-Hybridmodule bieten den Vorteil, dass die Hochfrequenz-Behandlung als solche gut beherrscht wird. Untersucht man bekannte HF-Systeme, (z.B. Transpondertechnik, Bluetooth, Garagentorsteuerungen, Wettersensoren usw.) auf ihre Eignung für die vorliegende Applikation, so stellt sich heraus, dass sich das 433 MHz-Band gut eignet:
- Es bietet die Möglichkeit der gebührenfreien Nutzung.
- Es sind handelsübliche und deshalb preiswerte Komponenten einsetzbar.
- Sie erlaubt eine zugeschneiderte Datencodierung durch preisgünstige Softwaremodule.
- Sie lässt sich baulich in die anvisierten Beleuchtungskörper integrieren.
- Sie unterstützt den energiesparenden Stand-By-Betrieb der Erfindung.

Die Datendecodierung 2 gemäß Figur 2 erfolgt für die erfindungsgemäße Applikation durch Programmierung der Software, die den im Empfänger vorhandenen Mikroprozessor steuert.

In dem Block 3 (Funktionsbeschreibung) werden die Einzelheiten der gewünschten Schaltvorgänge festgelegt. Auch hier geschieht die Realisierung per Software-Programmierung des im Empfänger enthaltenen Mikroprozessors.

Im Funktionsblock 4 (Aktoren) werden die im Block 3 definierten Schaltvorgänge so umgesetzt, dass die Leuchtelemente gemäß Figur 1 ein- oder ausgeschaltet werden.

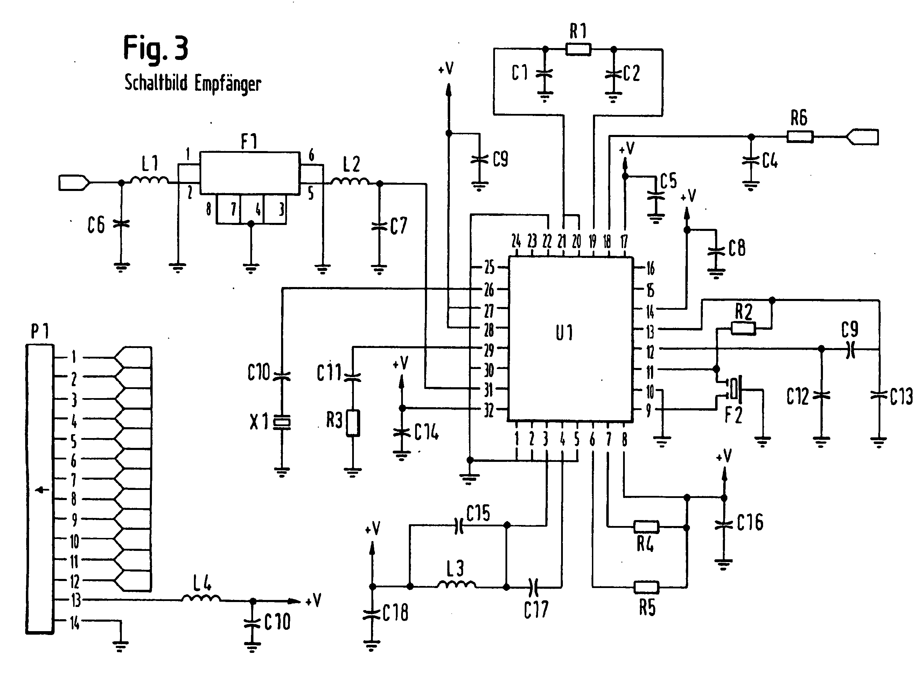

Die Figur 3 zeigt ein mögliches Ausführungsbeispiel für ein Schaltbild des Fernbedienungsempfängers gemäß Figur 1. Dem Fachmann ist die bauliche Struktur eines solchen Empfängers bekannt.

Als Sender gemäß Figur 1 kann jeder handelsübliche Sender, allerdings mit entsprechender Softwareprogrammierung gemäß der Erfindung, eingesetzt werden.

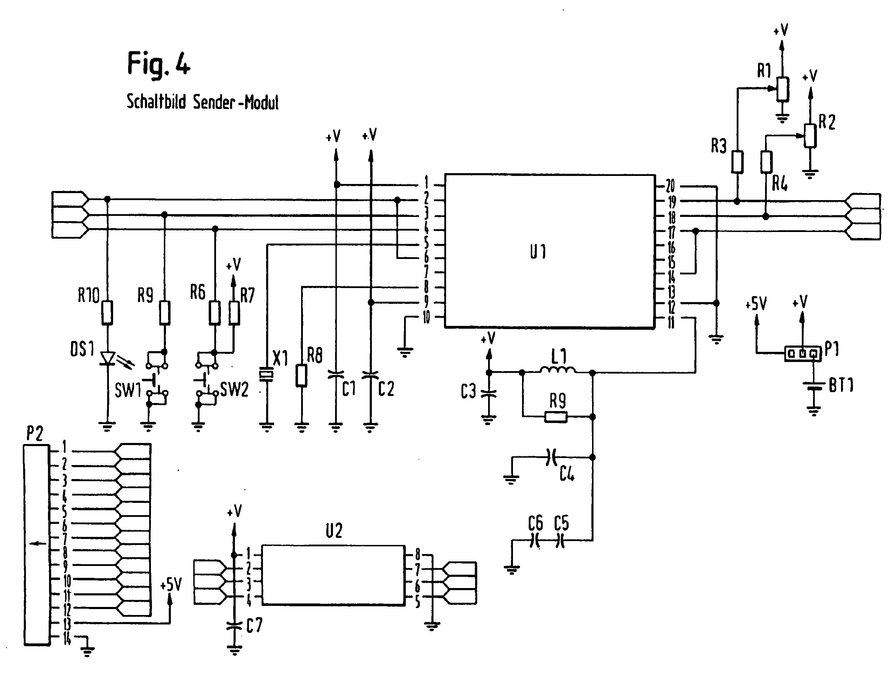

In Figur 4 ist als Ausführungsbeispiel ein Transmittermodul für das Band 433 MHz dargestellt. Dem Fachmann sind derartige Schaltbilder und deren Softwareprogrammierung geläufig.

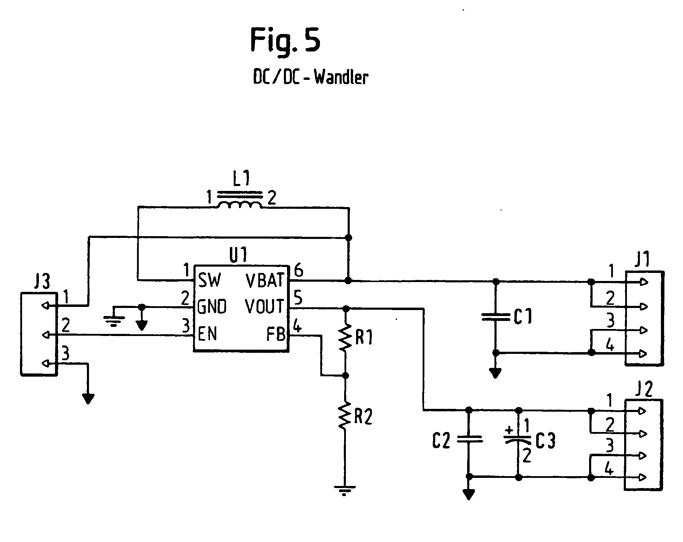

Zur Leistungsversorgung für die Elemente des erfindungsgemäßen Beleuchtungssystems ist noch ein Gleichspannungswandler erforderlich, der eine Ausgangsspannung von 3 V zur Verfügung stellt. Ein Ausführungsbeispiel eines derartigen Gleichspannungswandlers ist in dem Schaltbild gemäß Figur 5, das dem Fachmann vertraut ist, dargestellt. Dieser handelsübliche Wandler ist in der Lage, eine Eingangsspannung etwa einer Batterie von 0,95 V bis 1,5 V in eine stabile 3 V-Versorgungsspannung umzuwandeln.

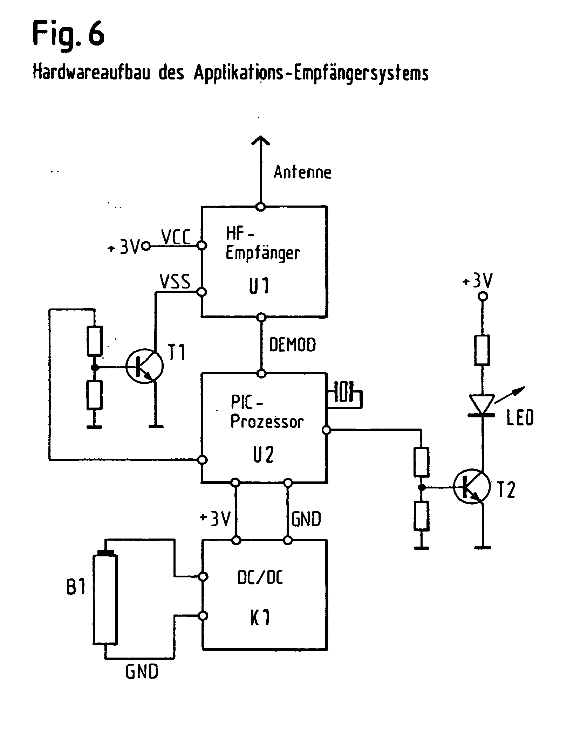

Damit ergibt sich insgesamt der in Figur 6 dargestellte Hardwareaufbau für das Empfängersystem. Eine Batterie B1 (Spannungsbereich zwischen 0,95 V und 1,5 V) versorgt den Gleichspannungswandler K1, der gemäß dem Schaltbild in Figur 5 ausgebildet sein kann. Mit der Versorgungsspannung von 3 V wird ein Prozessor U2 betrieben, der die Blöcke 2 und 3 gemäß Figur 2 realisiert. Mit der Versorgungsspannung von 3 V wird auch ein Hochfrequenzempfänger U1 betrieben, der die vom Sender abgestrahlten und von einer Antenne empfangenen Hochfrequenzsignale demoduliert. Die demodulierten Signale werden gemäß Figur 6 in Verbindung mit Figur 2 an den Prozessor U2 (Blöcke 2 und 3 gemäß Figur 2) weitergeleitet. Der Prozessor U2 wird mit einer quarzkristallgesteuerten Taktfrequenz betrieben.

Die von der Software des Prozessors U2 geformten Schaltsignale werden über den Aktor T2 (Block 4 in Figur 2) an das Leuchtelement weitergeleitet, das beispielsweise von einer Leuchtdiode LED gebildet wird. Auch diese Leuchtdiode kann mit der allgemeinen Betriebsspannung von 3 V (die durch den Wandler K1 zur Verfügung gestellt wird) betrieben werden.

Schließlich stellt der Prozessor U2 ein weiteres Ausgangssignal zur Verfügung, das über den Schalttransistor T1 an den Eingang VSS des HF-Empfängers U1 zurückgekoppelt wird. Dadurch wird der HF-Empfänger U 1 freilaufend in eine getaktete Empfangsbereitschaft geschaltet. Da jeder Empfänger des Beleuchtungssystems gemäß Figur 6 asynchron intermittierend in diese Empfangsbereitschaft geschaltet wird, wird einerseits viel Energie gespart, und andererseits das Kollektiv von Leuchtelementen asynchron gezündet.

Die Leuchtelemente können neben dem dargestellten Beispiel von elektrischen Baumkerzen auch elektrische Baumschmuckelemente oder Gartenleuchten oder Partyleuchten oder ähnliches sein.

Das Tastverhältnis der asynchronen, intermittierenden Empfangsbereitschaft beträgt vorzugsweise 1:50. Auf diese Weise wird im Vergleich zu einer ständigen Empfangsbereitschaft lediglich ein 50stel für die Empfängerenergie benötigt.

Der Prozessor U2 gemäß Figur 6 kann auch so programmiert sein, dass der Empfänger zunächst eine Bereitschaftsinformation vom Sender erhält, so dass alle Empfänger in ständige Bereitschaft geschaltet werden, und der Sender danach eine frei verteilbare oder frei vorgehbare Einschaltinformation für das ganze Kollektiv erzeugt. Die frei verteilbare Anschaltinformation kann im Sonderfall auch darin bestehen, dass die Einschaltinformation des Senders gleichzeitig an die Empfangsschaltungen/Leuchtelemente der Gruppe gesendet werden. Alternativ können die Einschaltinformationen des Senders gestaffelt an das Kollektiv gesendet werden.

Es liegt auch im Rahmen der Erfindung, die zunächst asynchron freilaufende Gruppe von Empfangsschaltungen durch eine anfängliche Synchronisierungsinformation zu synchronisieren. Dadurch wird die intermittierende, energiesparende Empfangsbereitschaft beibehalten, jedoch laufen die Empfänger dann synchron. In diesem Fall wird dann die Einschaltinformation des Senders gleichzeitig an die Empfangsschaltungen/Leuchtelemente der Gruppe gesendet.

Auf diese Art lässt sich insgesamt das Ein- und Ausschaltverhalten des Beleuchtungskollektivs frei programmieren, ohne eine energieraubende Empfangsbereitschaft realisieren zu müssen.

## Patentansprüche

1. Ein Beleuchtungssystem
mit mindestens einer Gruppe von Leuchtelementen,
mit im Wesentlichen gleichartigen drahtlosen Empfangsschaltungen (U1),
und Mikroprozessoren,
wobei eine Empfangsschaltung durch den jeweiligen Mikroprozessor ein- und ausschaltbar ist, und
wobei eine Empfangsschaltung derart eingerichtet ist, in einer Empfangsbereitschaft von einem drahtlosen Sender mindestens eine Ein- oder Ausschaltinformation und/oder Bereitschaftsinformation und/oder Synchronisierungsinformation zu erhalten,
**dadurch gekennzeichnet, dass** der Mikroprozessor so eingerichtet ist, die jeweilige Empfangsschaltung einer Gruppe freilaufend entweder auszuschalten oder in Empfangsbereitschaft zu schalten.

2. Beleuchtungssystem nach Anspruch 1, **dadurch gekennzeichnet, dass** die Leuchtelemente elektrische Baumkerzen oder elektrische Baumschmuckelemente oder Gartenleuchten oder Partyleuchten sind.

3. Beleuchtungssystem nach einem der vorhergehenden Ansprüche, **gekennzeichnet durch** ein Tastverhältnis der Empfangsbereitschaft, d.h. **durch** ein Verhältnis der Bereitschaftszeit zur gesamten Periode,
mit dem die Empfangsschaltung/das Leuchtelement einer Gruppe freilaufend zu den anderen Empfangsschaltungen/ Leuchtelementen einer Gruppe
von einem ausgeschalteten Zustand in die Empfangsbereitschaft geschaltet wird.

4. Beleuchtungssystem nach Anspruch 3, **dadurch gekennzeichnet, dass** das Tastverhältnis der Empfangsbereitschaft etwa 1:50 beträgt.

5. Beleuchtungssystem nach einem der vorhergehenden Ansprüche 1 bis 4, **dadurch gekennzeichnet, dass** die Empfangsschaltungen nach Erhalt einer Bereitschaftsinformation von dem Sender frei verteilbare Einschaltinformationen erhalten.

6. Beleuchtungssystem nach Anspruch 5, **dadurch gekennzeichnet, dass** die Einschaltinformationen des Senders gleichzeitig an die Empfangsschaltungen/Leuchtelemente der Gruppe gesendet werden.

7. Beleuchtungssystem nach Anspruch 5, **dadurch gekennzeichnet, dass** die Einschaltinformationen der Sender gestaffelt an die Empfangsschaltungen/Leuchtelemente der Gruppe gesendet werden.

8. Beleuchtungssystem nach einem der Ansprüche 3 bis 4, **dadurch gekennzeichnet, dass** die freilaufende Gruppe von Empfangsschaltungen zunächst durch eine Synchronisierungsinformation synchronisiert wird und **dadurch** in eine synchron intermittierende Empfangsbereitschaft geschaltet wird.

9. Beleuchtungssystem nach Anspruch 8, **dadurch gekennzeichnet, dass** eine Einschaltinformation des Senders gleichzeitig an die Empfangsschaltungen/Leuchtelemente der Gruppe gesendet wird.

## Claims

1. Lighting system with at least one group of light-emitting elements, with substantially identical wireless reception circuits (U1) and microprocessors, it being possible for a reception circuit to be switched on and off by the respective microprocessor, and a reception circuit being designed to obtain at least one item of switch-on or switch-off information and/or readiness information and/or synchronization information in the event of reception readiness of a wireless transmitter, **characterized in that** the microprocessor is designed, in freewheeling fashion, either to switch off the respective reception circuit in a group or to switch said respective reception circuit to reception readiness.

2. Lighting system according to Claim 1, **characterized in that** the light-emitting elements are electric tree lights or electric tree decorations or garden lights or party lights.

3. Lighting system according to one of the preceding claims, **characterized by** a duty factor of the reception readiness, i.e. by a ratio of the readiness time with respect to the entire period, with which the reception circuit/the light-emitting element in a group is switched from a switched-off state over to reception readiness in freewheeling fashion with respect to the other reception circuits/light-emitting elements in a group.

4. Lighting system according to Claim 3, **characterized in that** the duty factor of the reception readiness is approximately 1:50.

5. Lighting system according to one of the preceding Claims 1 to 4, **characterized in that** the reception circuits receive items of switch-on information which can be freely distributed once an item of readiness information has been received from the transmitter.

6. Lighting system according to Claim 5, **characterized in that** the items of switch-on information from the transmitter are transmitted simultaneously to the reception circuits/light-emitting elements in the group.

7. Lighting system according to Claim 5, **characterized in that** the items of switch-on information from the transmitter are transmitted in staggered fashion to the reception circuits/light-emitting elements in the group.

8. Lighting system according to one of Claims 3 to 4, **characterized in that** the freewheeling group of reception circuits is initially synchronized by an item of synchronization information and is thus switched over to synchronously intermittent reception readiness.

9. Lighting system according to Claim 8, **characterized in that** an item of switch-on information from the transmitter is transmitted simultaneously to the reception circuits/light-emitting elements in the group.

## Revendications

1. Système d'éclairage,
avec au moins un groupe d'éléments d'éclairage,
avec des circuits de réception sans fil (U1) et des microprocesseurs similaires pour l'essentiel,
dans lequel un circuit de réception peut être mis en route et arrêté au moyen d'un microprocesseur respectif, et
dans lequel un circuit de réception est installé de manière à recevoir au moins une information de mise en route ou d'arrêt et/ou information de disponibilité et/ou information de synchronisation dans un mode de disponibilité pour la réception d'un récepteur sans fil,
**caractérisé en ce que** le microprocesseur est installé de manière à commuter librement le circuit de réception respectif d'un groupe soit en arrêt soit dans le mode de disponibilité pour la réception.

2. Système d'éclairage selon la revendication 1, **caractérisé en ce que** les éléments d'éclairage sont soit des bougies électriques pour arbre, soit des éléments décoratifs électriques pour arbre ou des éclairages de jardin ou des éclairages de soirées.

3. Système d'éclairage selon une des revendications précédentes, **caractérisé par** un rapport cyclique de scrutation du mode de disponibilité pour la réception c'est-à-dire par un rapport de la durée de disponibilité sur l'ensemble de la période,
selon lequel le circuit de réception /l'élément d'éclairage d'un groupe est librement commuté par rapport aux autres circuits de réception /éléments d'éclairage d'un groupe d'un état arrêté vers le mode de disponibilité pour la réception.

4. Système d'éclairage selon la revendication 3, **caractérisé en ce que** le rapport cyclique de scrutation du mode de disponibilité pour la réception est de 1:50.

5. Système d'éclairage selon une des revendications 1 à 4, **caractérisé en ce qu'**après réception d'une information de disponibilité, les circuits de réception reçoivent des informations de mise en route pouvant être distribuées librement.

6. Système d'éclairage selon la revendication 5, **caractérisé en ce que** les informations de mise en route de l'émetteur sont envoyées simultanément aux circuits de réception /éléments d'éclairage du groupe.

7. Système d'éclairage selon la revendication 5, **caractérisé en ce que** les informations de mise en route de l'émetteur sont envoyées successivement aux circuits de réception /éléments d'éclairage du groupe.

8. Système d'éclairage selon une des revendications 3 à 4, **caractérisé en ce que** le groupe fonctionnant librement est tout d'abord synchronisé par les circuits de réception au moyen d'une information de synchronisation et de ce fait commuté dans un mode de disponibilité intermittente synchrone pour la réception.

9. Système d'éclairage selon la revendication 8, **caractérisé en ce qu'**une information de mise en route de l'émetteur est envoyée simultanément aux circuits de réception /éléments d'éclairage du groupe.
